# EUROPÄISCHE PATENTANMELDUNG

(11) **EP 2 626 592 A1**
(43) Veröffentlichungstag der Anmeldung: **14.08.2013**
(21) Anmeldenummer: 12154415.9
(22) Anmeldetag: 08.02.2012
(51) Int. Cl.: F16G 1/08, F16G 1/10, F16G 1/12, F16G 1/28

(54) **Zahnriemen**

(71) Anmelder: BRECO Antriebstechnik Breher GmbH & Co. KG, 32457 Porta Westfalica (DE)
(72) Erfinder: Volbarth, Jürgen, 32457 Porta Westfalica (DE); Steinert, Thomas, 32545 Bad Oeynhausen (DE)
(74) Vertreter: Zenz

(57) **Zusammenfassung**

Bei einem Zahnriemen (1) mit einem elastischen Grundkörper (2) und mit auf einer Seitenfläche des Grundkörpers (2) angeordneten Zahnprofilen (3), wobei der Grundkörper (2) durch längslaufende Zugträger (5, 15, 25, 35, 45, 55) verstärkt ist, die ein in Bezug auf die Breitenrichtung (BR) des Zahnriemens (1) vorzugsweise symmetrisches Zugbelastbarkeitsprofil (6) ausbilden, soll eine Lösung geschaffen werden, durch die auf konstruktiv einfache Weise und kostengünstig ein verbesserter Zahnriemen bereitgestellt wird, welcher gleichbleibende gute Gebrauchseigenschaften während einer langen Lebensdauer aufweist. Dies wird dadurch erreicht, dass das von den Zugträgern (5, 15, 25, 35, 45, 55) ausgebildete Zugbelastbarkeitsprofil (6) in Breitenrichtung (BR) des Zahnriemens (1) in Abhängigkeit von dem Durchmesser und/oder dem Werkstoff der Zugträger (5, 15, 25, 35, 45, 55) variierend ausgebildet ist.

## Beschreibung

Die Erfindung richtet sich auf einen Zahnriemen mit einem elastischen Grundkörper und mit auf einer Seitenfläche des Grundkörpers angeordneten Zahnprofilen, wobei der Grundkörper durch längslaufende Zugträger verstärkt ist, die ein in Bezug auf die Breitenrichtung des Zahnriemens vorzugsweise symmetrisches Zugbelastbarkeitsprofil ausbilden.

Zahnriemen können in betrieblichem Einsatz beispielsweise als Endlosriemen ausgebildet und über Zahnscheiben mit parallelen oder verschränkten Achsen umgelenkt werden. Sie dienen als Förderbänder oder Antriebsriemen und sind bei hohen Umlaufgeschwindigkeiten erheblichen Zug- und Biegebelastungen ausgesetzt. Eine Beschädigung des Zahnriemens führt naturgemäß zu erheblichen Betriebsstörungen und unter Umständen zu schwerwiegenden Produktionsausfällen. Aus Schadensbildern ausgefallener Zahnriementriebe ist es bekannt, dass der Seitenkanten- und Laufflächenverschleiß und die Materialermüdung der Zugträger (Drahtbruch) sowie die Materialermüdung des Polyurethans (Rissbildung) hinsichtlich der Lebensdauer eines Zahnriemens große Relevanz besitzen. Es ist für die Nutzungsdauer eines Zahnriemens von Vorteil, wenn Lastspitzen minimiert werden können, insbesondere weil die Lebensdauer durch die Ermüdung des höchstbelasteten Bereichs im Zahnriemen bestimmt wird. Da ein Zahnriemen stets eine vorgegebene äußere Last zu ertragen hat, ist im Hinblick auf die Lebensdauer ein Abbau bzw. eine Reduzierung von Spannungsmaxima bzw. Spannungsspitzen angestrebt. Insbesondere in Fällen, bei denen im Antrieb unvorhergesehene große Belastungen, zum Beispiel hervorgerufen durch Montagefehler (Wellenschiefstand oder Achsversatz), falsche Riemenvorspannung oder durch dynamische Effekte (Resonanzen, Schwingungen), auftreten, wäre es wünschenswert, wenn ein zukünftiger Zahnriemen eine größere Lebensdauerreserve bieten würde.

Der Erfindung liegt daher die Aufgabe zugrunde eine Lösung zu schaffen, die auf konstruktiv einfache Weise und kostengünstig einen verbesserten Zahnriemen bereitstellt, welcher gleichbleibende gute Gebrauchseigenschaften während einer langen Lebensdauer aufweist.

Bei einem Zahnriemen der eingangs bezeichneten Art wird diese Aufgabe erfindungsgemäß dadurch gelöst, dass das von den Zugträgern ausgebildete Zugbelastbarkeitsprofil in Breitenrichtung des Zahnriemens in Abhängigkeit von dem Durchmesser und/oder dem Werkstoff der Zugträger variierend ausgebildet ist. Bei den aus dem Stand der Technik bekannten Zahnriemen bilden die Zugträger ein Zugbelastbarkeitsprofil aus, welches in Breitenrichtung des Zahnriemens sich nicht ändert, d.h. konstant ist, und stets eine im Wesentlichen gleiche Zugbelastbarkeit bzw. Zugfestigkeit aufweist. Davon unterscheidet sich der erfindungsgemäße Zahnriemen dadurch, dass von den Zugträgern ein sich in Breitenrichtung des Zahnriemens änderndes Zugbelastbarkeitsprofil ausgebildet ist, bei welchem die Zugfestigkeit bzw. Zugbelastbarkeit entlang der Breite des Zahnriemens variiert. Dabei ist die Variation der Zugbelastbarkeit in Breitenrichtung des Riemens vom Durchmesser der Zugträger, vom Werkstoff der Zugträger oder von beidem, d.h. vom Durchmesser und vom Werkstoff der Zugträger, abhängig. Die Abhängigkeit von Werkstoff und/oder Durchmesser in Bezug auf die Zugbelastbarkeit definiert sich hierbei derart, dass zumindest ein Zugträger eine Zugbelastbarkeit bzw. Zugkraft aufweist, die sich von der Zugbelastbarkeit bzw. Zugkraft der übrigen Zugträger unterscheidet. Dadurch ist es möglich, sowohl ein symmetrisches, als auch in Breitenrichtung des Zahnriemens variierendes Zugbelastbarkeitsprofil zu erzeugen.

Vorteilhafte und zweckmäßige Ausgestaltungen und Weiterbildungen der Erfindung ergeben sich aus den Unteransprüchen.

Durch die Erfindung wird ein langlebiger Zahnriemen bereitgestellt. Dadurch, dass das von den Zugträgern ausgebildete Zugbelastbarkeitsprofil in Breitenrichtung des Zahnriemens variierend ausgebildet ist, ist sichergestellt, dass eine Vergleichmäßigung der Lastaufteilung auf die Zugträger erfolgt, was wiederum zu einem verbesserten Lasttragevermögen und zu einer höheren Lebensdauer des Zahnriemens führt. Die Variation des Zugbelastbarkeitsprofils in Breitenrichtung des Zahnriemens beschreibt makroskopische Änderungen der Zugfestigkeit, so dass im Betrieb auftretende Spannungsmaxima vermindert und der Verschleiß am Zahnriemen verringert werden. Somit wird durch die Erfindung die Materialermüdung des Zahnriemens verringert, indem die Verteilung der Lasten im Zahnriemen vergleichmäßigt werden. Dadurch wird die Differenz zwischen größter und kleinster Zugträgerbelastung reduziert, so dass die maximalen Lastspitzen in den Zugträgern abnehmen. Durch Änderungen an der Verteilung, der Kombination oder des Werkstoffs der Zugträger im Inneren des Zahnriemens erfolgt erfindungsgemäß die Vergleichmäßigung der Lastverteilung in den Zugträgern.

Eine besonders einfache Möglichkeit, unterschiedliche Zugbelastbarkeiten bzw. Zugfestigkeiten für die Zugträger zu realisieren, besteht in Ausgestaltung der Erfindung darin, dass zumindest ein Zugträger einen Durchmesser aufweist, der sich von dem Durchmesser der übrigen Zugträger unterscheidet. Somit wird die Zugträgerlage von Zugträgern mit wenigstens zwei unterschiedlichen Durchmessern gebildet, was bei Zugträgern aus gleichem Werkstoff zu unterschiedlichen Zugbelastbarkeiten bzw. Zugfestigkeiten führt.

Um das sich in Breitenrichtung des Zahnriemens ändernde Zugbelastbarkeitsprofil auszubilden, sieht die Erfindung in alternativer Ausgestaltung vor, dass zumindest ein Zugträger aus einem Werkstoff gebildet ist, der sich von dem Werkstoff der übrigen Zugträger unterscheidet. Als beispielhafte Werkstoffe für die Zugträger kommen die Materialien Aramidfaser, Glasfaser, Polyesterfaser, Kohlefaser und Stahllitzen in Betracht. Dadurch finden Zugträger mit zumindest zwei unterschiedlichen Werkstoffen im Zahnriemen Verwendung, was die Ausbildung eines variierenden Zugbelastbarkeitsprofils ermöglicht.

Während die vorstehend aufgeführten beiden Ausgestaltungen sich auf einen Zahnriemen bezogen, bei welchem wenigstens zwei unterschiedliche Arten von Zugträgern (entweder verschiedene Durchmesser oder Werkstoff) Verwendung finden, ist es in einer weiteren Ausgestaltung der Erfindung auch denkbar, dass zusätzlich zu dem Merkmal unterschiedlicher Durchmesser und/oder Werkstoffe für die Zugträger die Abstände zwischen benachbarten Zugträgern uneinheitlich sind. Dabei können die Zugträger entweder identisch ausgebildet sein (womit die Zugträger eine identische Zugkraft aufweisen würden) oder aber sich im Durchmesser und/oder Werkstoff unterscheiden (womit die Zugträger unterschiedliche Zugkräfte aufweisen würden). Die uneinheitlichen Abstände, d.h. dass sich die Abstände zwischen benachbarten Zugträgern in Breitenrichtung ändern, bewirken bei dieser Ausgestaltung das in Breitenrichtung des Zahnriemens variierende Zugbelastbarkeitsprofil.

In Weiterbildung der letztgenannten Ausgestaltung ist erfindungsgemäß vorgesehen, dass die Abstände zwischen benachbarten Zugträgern von der Mitte des Zahnriemens aus zu den Seitenkanten des Zahnriemens hin zunehmen. Alternativ können auch die Abstände zwischen benachbarten Zugträgern von der Mitte des Zahnriemens aus zu den Seitenkanten des Zahnriemens hin abnehmen. Das Zugbelastbarkeitsprofil lässt sich ferner in Breitenrichtung des Zahnriemens dadurch variieren, dass die Abstände zwischen benachbarten Zugträgern von der Mitte des Zahnriemens aus in Richtung der Seitenkanten des Zahnriemens zunächst abnehmen und dann bis zu den Seitenkanten wieder zunehmen. Dabei kann die Änderung der Abstände zwischen benachbarten Zugträgern kontinuierlich erfolgen. Ebenso ist es vorstellbar, dass die Abstände zwischen benachbarten Zugträgern von der Mitte des Zahnriemens aus in Richtung der Seitenkanten des Zahnriemens zunächst zunehmen und dann bis zu den Seitenkanten wieder abnehmen.

Schließlich sieht die Erfindung in Ausgestaltung vor, dass die Zugbelastbarkeit bei allen Zugträgern im Wesentlichen gleich hoch ist. In diesem Fall erfolgt die Variation des Zugbelastbarkeitsprofils in Breitenrichtung - wie zuvor bereits angesprochen - lediglich durch Änderung der Abstände zwischen benachbarten Zugträger, so dass die Zugträger keine äquidistante Verteilung in Breitenrichtung aufweisen, sondern vielmehr die Zwischenräume variabel bzw. variiert gestaltet sind.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsformen der Erfindung dargestellt sind. In der Zeichnung zeigt:
Figur 1 eine seitliche Ansicht eines Zahnriemens im Längsschnitt,
Figur 2 eine Querschnittsansicht des Zahnriemens mit einem Grundkörper gemäß einer ersten Ausführungsform,
Figur 3 das Zugbelastbarkeitsprofil des Zahnriemens aus Figur 2, wobei das Diagramm die variierende Zugfestigkeit über der Breite des Zahnriemens darstellt,
Figur 4 eine Querschnittsansicht des Zahnriemens mit einem Grundkörper gemäß einer zweiten Ausführungsform,
Figur 5 eine Querschnittsansicht des Zahnriemens mit einem Grundkörper gemäß einer dritten Ausführungsform,
Figur 6 eine Querschnittsansicht des Zahnriemens mit einem Grundkörper gemäß einer vierten Ausführungsform,
Figur 7 eine Querschnittsansicht des Zahnriemens mit einem Grundkörper gemäß einer fünften Ausführungsform,
Figur 8 eine Querschnittsansicht des Zahnriemens mit einem Grundkörper gemäß einer sechsten Ausführungsform,
Figur 9 eine Querschnittsansicht des Zahnriemens mit einem Grundkörper gemäß einer siebten Ausführungsform,
Figur 10 eine Querschnittsansicht des Zahnriemens mit einem Grundkörper gemäß einer achten Ausführungsform und
Figur 11 eine Querschnittsansicht des Zahnriemens mit einem Grundkörper gemäß einer neunten Ausführungsform.

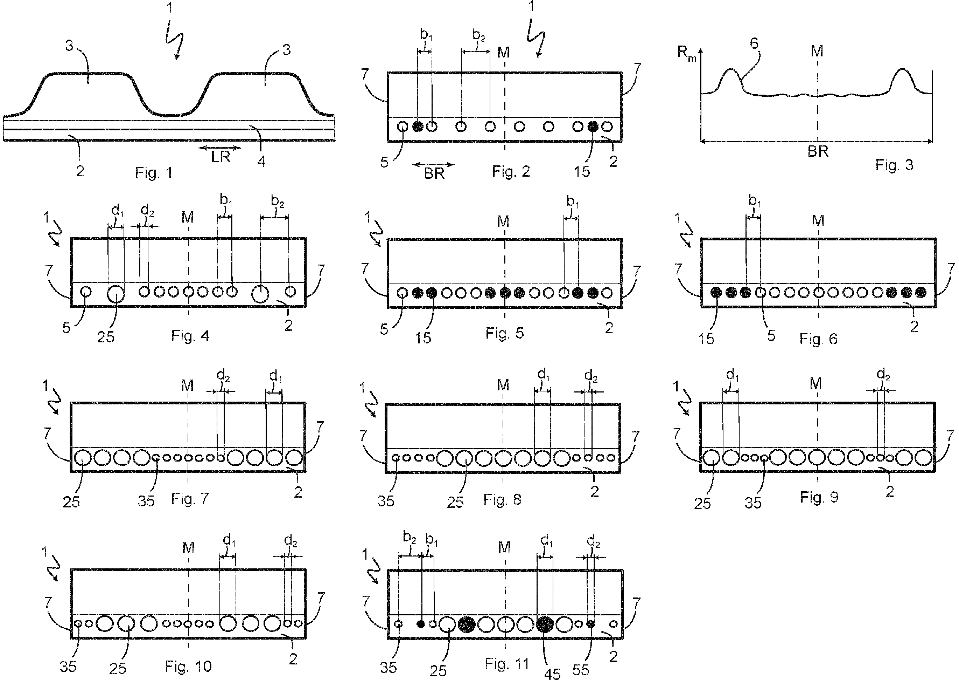

Ein erfindungsgemäßer Zahnriemen 1 ist in Figur 1 exemplarisch in einer seitlichen Ansicht im Längsschnitt dargestellt. Der Zahnriemen 1 umfasst einen elastischen Grundkörper 2, der von einem Kunststoffmaterial, vorzugsweise Polyurethan, gebildet ist. Auf einer Seitenfläche des Grundkörpers 2 sind Zahnprofile 3 angeordnet, die einstückig mit dem Grundkörper 2 aus Kunststoffmaterial ausgebildet sind. Mit Bezug auf Figur 2, die einen Grundkörper 2 gemäß einer ersten Ausführungsform zeigt, ist in den Grundkörper 2 des Zahnriemens 1 eine Verstärkungslage 4 eingebracht, die von einer Zugträgerlage, die wiederum mehrere längslaufende Zugträger 5 und 15 aufweist, gebildet ist. Hierbei sind die Zugträger 5 und 15, welche zum Beispiel die Kräfte von der Antriebs- auf die Abtriebsscheibe übertragen, in Breitenrichtung BR nebeneinanderliegend angeordnet und verstärken den Grundkörper 2.

Bei der in Figur 2 dargestellten ersten Ausführungsform des Grundkörpers 2 sind die Zugträger 5 und 15 aus einem unterschiedlichen Werkstoff gebildet, wobei der Werkstoff der Zugträger 15 eine höhere Zugfestigkeit aufweist. Die Zugträger 5 und 15 bilden das in Figur 3 dargestellte Zugbelastbarkeitsprofil 6 aus, welches die Verteilung der Zugbelastbarkeit bzw. Zugfestigkeit Rₘ des Zahnriemens 1 in Breitenrichtung BR zeigt. Zu diesem Zweck ist in Figur 3 ein Diagramm dargestellt, bei welchem die Zugfestigkeit Rₘ über der Breite des Zahnriemens 1 aufgetragen ist. Wie aus dem Diagramm von Figur 3 hervorgeht, wird von den Zugträgern 5 und 15 das Zugbelastbarkeitsprofil 6 ausgebildet, welches in Breitenrichtung BR mit Bezug auf die Mittelebene bzw. Mitte M des Zahnriemens 1 symmetrisch ist. Im Gegensatz zu aus dem Stand der Technik bekannten Zahnriemen weist der erfindungsgemäße Zahnriemen 1 jedoch ein Zugbelastbarkeitsprofil 6 auf, welches nicht konstant, sondern in Breitenrichtung BR variierend ausgebildet ist. Im Unterschied zur Erfindung weisen die aus dem Stand der Technik bekannten Zahnriemen eine Zugfestigkeit Rₘ auf, die sich in Breitenrichtung nicht ändert, so dass ein konstantes Zugbelastbarkeitsprofil vorliegt. Demgegenüber ändert sich bei dem erfindungsgemäßen Zahnriemen 1 die Zugbelastbarkeit bzw. Zugfestigkeit Rₘ in Breitenrichtung, wie aus Figur 3 hervorgeht, wodurch ein Zugbelastbarkeitsprofil 6 vorliegt, welches in Breitenrichtung BR in Abhängigkeit von dem für die Zugträger 5, 15 verwendeten Werkstoff variiert. Die Variation der Zugfestigkeit Rₘ in Breitenrichtung BR ist bei der in Figur 2 dargestellten Ausführungsform sowohl auf den Werkstoff, als auch darauf zurückzuführen, dass gewisse Abstände, wie die beiden in Figur 2 definierten Abstände b₁ und b₂, zwischen benachbarten Zugträgern 5 - und hier vorzugsweise von benachbarten Zugträgern 5 aus gleichem Werkstoff - uneinheitlich sind. Das in Figur 3 dargestellte Zugbelastbarkeitsprofil 6, welches sich aus der ungleichmäßigen Verteilung der Zugträger 5 und 15 sowie aufgrund der unterschiedlichen Werkstoffe der Zugträger 5, 15 entsprechend der Figur 2 ergibt, ist dabei einer Lastverteilung angepasst, bei welcher der Zahnriemen 1 im Bereich seiner Seitenkanten 7 einer höheren Belastung im Betrieb als im Bereich seiner Mitte M ausgesetzt ist. Dementsprechend ist die Verteilung der Zugträger 5 entsprechend definiert und die Werkstoffauswahl für die Zugträger 15 in Bezug auf die Zugträger 5 erfolgt, wobei insgesamt die Zugträger 5, 15 bei der in Figur 2 dargestellten ersten Ausführungsform am Rand bzw. zu den Seitenkanten 7 des Zahnriemens 1 hin konzentriert angeordnet sind. Damit nehmen für diese Ausführungsform die Abstände b₁, b₂ zwischen benachbarten Zugträgern 5 von der Mitte M des Zahnriemens 1 aus zu den Seitenkanten 7 des Zahnriemens 1 hin ab.

In Figur 4 ist eine zweite Ausführungsform eines Grundkörpers 2 dargestellt, bei dem die Zugträger 5 und 25 unterschiedliche Durchmesser d₁ und d₂ aufweisen. Jedoch sind die Zugträger 5, 25 bei dieser Ausführungsform aus einem identischen Werkstoff gebildet. Neben unterschiedlichen Durchmessern d₁, d₂ ist die Anordnung der Zugträger 5, 25 bei der zweiten Ausführungsform zur Mitte M des Zahnriemens 1 hin konzentriert, d.h. dass die kleinsten Abstände b₁ zwischen benachbarten Zugträgern 5 im Bereich der Mitte M des Zahnriemens 1 vorhanden sind, wohingegen zu den Seitenkanten hin der Abstand b₂ größer als in der Mitte ist. Somit nehmen die Abstände b₁, b₂ zwischen benachbarten Zugträgern 5 von der Mitte M des Zahnriemens 1 aus zu den Seitenkanten 7 des Zahnriemens 1 zu. Abwandlungen von den in den Figuren 2 und 4 dargestellten Ausführungsformen sind für den Fachmann offensichtlich. Beispielsweise ist es denkbar, dass die Abstände zwischen benachbarten Zugträgern 5 von der Mitte M des Zahnriemens 1 aus in Richtung der Seitenkanten 7 des Zahnriemens 1 zunächst abnehmen und dann bis zu den Seitenkanten 7 wieder zunehmen. Auch ist es vorstellbar, dass die Abstände zwischen benachbarten Zugträgern 5 von der Mitte M des Zahnriemens 1 aus in Richtung der Seitenkanten 7 des Zahnriemens 1 zunächst zunehmen und dann bis zu den Seitenkanten 7 hin wieder abnehmen. Die Variation des Durchmessers erfolgt erfindungsgemäß in einem Bereich von maximal 30%, d.h. der größte Durchmesser eines Zugträgers ist maximal 30% größer als der des Zugträgers mit dem kleinsten Durchmesser.

Eine dritte und vierte Ausführungsform eines Grundkörpers 2 ist in der Figur 5 bzw. 6 gezeigt. Diese Ausführungsformen unterscheiden sich von den zuvor beschriebenen beiden Ausführungsformen dadurch, dass die Zugträger 5, 15 nun in Breitenrichtung BR des Zahnriemens 1 gleichmäßig voneinander beabstandet und untereinander gleichmäßig verteilt angeordnet sind. Demnach sind die Abstände b₁ von benachbarten Zugträgern 5, 15 identisch ausgebildet, so dass die Zugträger 5, 15 äquidistant in Breitenrichtung BR beabstandet sind. Jedoch weisen bei den Zahnriemen 1 der dritten und vierten Ausführungsform die Zugträger 5, 15 eine unterschiedliche Zugfestigkeit Rₘ auf. Zumindest weist ein Zugträger 15 des Zahnriemens 1 eine Zugfestigkeit bzw. Zugbelastbarkeit Rₘ auf, die sich von der Zugfestigkeit bzw. Zugbelastbarkeit Rₘ der übrigen Zugträger 5 unterscheidet, wodurch ein sich in Breitenrichtung änderndes Zugbelastbarkeitsprofil 6 sicher gestellt ist. Eine unterschiedliche Zugfestigkeit Rₘ wird bei der dritten und vierten Ausführungsform dadurch erreicht, dass die Zugträger 5 und 15 aus unterschiedlichen Werkstoffen gebildet sind, wobei die Zugträger 5, 15 beispielsweise aus Aramidfasern, Glasfasern, Stahllitzen, Kohlefasern oder Polyesterfasern gebildet sein können. Wichtig für ein in Breitenrichtung BR variierendes Zugbelastbarkeitsprofil 6 ist, dass zumindest ein Zugträger 15 aus einem Werkstoff gebildet ist, der sich von dem Werkstoff der übrigen Zugträger 5 unterscheidet. Mit Bezug auf die Figuren 5 und 6 weisen in den dargestellten Beispielen die Zugträger 15 eine höhere Zugfestigkeit Rₘ als die Zugträger 5 auf, so dass ein in Breitenrichtung BR des Zahnriemens 1 variierendes Zugbelastbarkeitsprofil vorliegt. Bei Figur 5 werden somit unterschiedliche Werkstoffe in der Mitte M und am Rand 7 des Zahnriemens 1 verwendet, so dass die Zugfestigkeit Rₘ von der Mitte aus abnimmt und dann zu den Seitenkanten 7 hin wieder zunimmt, wohingegen bei der in Figur 6 dargestellten vierten Ausführungsform die Zugfestigkeit Rₘ von den Seitenkanten 7 bis zur Mitte M hin abnimmt, was insgesamt auf die Anordnung der Zugträger 5 und 15 zurückzuführen ist, die aus unterschiedlichen Werkstoffen bestehen.

Auch bei der fünften bis achten Ausführungsform des Grundkörpers 2, die in den Figuren 7 bis 10 gezeigt sind, sind die Zugträger 25 und 35 in Breitenrichtung BR des Zahnriemens 1 gleichmäßig voneinander und untereinander angeordnet, so dass die Zugträger 25, 35 äquidistant in Breitenrichtung BR beabstandet sind. Eine unterschiedliche Zugfestigkeit bzw. Zugbelastbarkeit Rₘ zwischen den Zugträgern 25, 35 wird dadurch erreicht, indem ein Zugträger 25 einen Durchmesser d₁ aufweist, der sich von dem Durchmesser d₂ der übrigen Zugträger 25, 35 unterscheidet. Je nach Anordnung der Zugträger 25, 35 mit ihren unterschiedlichen Durchmessern d₁, d₂ ist es somit möglich, einen Zahnriemen 1 mit einem in Breitenrichtung BR variierenden Zugbelastbarkeitsprofil zu erzeugen. In den Figuren 7 und 8 weisen die Zugträger 25, 35 unterschiedliche Durchmesser d₁, d₂ in der Mitte M und am Rand 7 des Zahnriemens 1 auf. Dabei sind die Zugträger 25 und 35 bei diesen Ausführungsformen aus einem identischen Werkstoff gebildet, so dass die Zugträger 25 mit dem größeren Durchmesser d₁ auch eine höhere Zugfestigkeit Rₘ im Vergleich zu den Zugträgern 35 aufweisen. Dadurch weist der in Figur 7 im Querschnitt dargestellte Zahnriemen 1 in seiner Mitte M die geringste Zugfestigkeit Rₘ auf, die jedoch zu den Seitenkanten 7 hin zunimmt, weil dort die Zugträger 25 mit dem größeren Durchmesser d₁ angeordnet sind. Bei der in Figur 8 dargestellten Ausführungsform verhält es sich im Vergleich zu der in Figur 7 gezeigten Ausführungsform genau anders herum. Da die Zugträger 25 mit dem größeren Durchmesser d₁ im Bereich der Mitte M des Zahnriemens 1 angeordnet sind, weist der Zahnriemen 1 dort auch eine höhere Zugfestigkeit Rₘ auf, die aber zu den Seitenkanten 7 hin abnimmt, da dort die Zugträger 35 mit dem kleineren Durchmesser d₂ angeordnet sind. Auf diese Weise liegt ein mit Bezug auf die Mitte M des Zahnriemens 1 symmetrisches Zugbelastbarkeitsprofil des Zahnriemens 1 vor, welches in Breitenrichtung BR variiert. Demgegenüber nimmt bei der in Figur 9 dargestellten Ausführungsform die Zugfestigkeit Rₘ von der Mitte M des Zahnriemen 1 zunächst ab und steigt dann wieder zu den Seitenkanten 7 zu. Schließlich zeigt Figur 10 eine Ausführungsform für eine Durchmesservariation der Zugträger 25 und 35, bei welcher die Zugfestigkeit Rₘ von der Mitte M des Zahnriemen 1 zunächst zunimmt und dann zu den Seitenkanten 7 hin wieder abnimmt.

Figur 11 zeigt eine Kombination von Merkmalen, wie sie vorstehend bereits beschrieben wurden. Genauer gesagt werden bei der in Figur 11 dargestellten Ausführungsformen die Merkmale der Abstandsvariation bei benachbarten Zugträgern (siehe die Ausführungsformen der Figuren 2 und 4), der Werkstoffvariation (siehe die Ausführungsformen der Figuren 5 und 6) und der Durchmesservariation der Zugträger (siehe die Ausführungsformen der Figuren 7 bis 10) realisiert. Wie ersichtlich ist, sind die Zugträger 25, 35, 45 und 55 bei dieser Ausführungsform nicht gleichmäßig voneinander beabstandet - vielmehr variiert der Abstand b₁ bzw. b₂ zwischen den Zugträgern 25, 35, 45 und 55 in Breitenrichtung BR. Es sei angemerkt, dass bei der in Figur 11 dargestellten Merkmalskombination ein in Breitenrichtung BR des Zahnriemens 1 variierendes Zugbelastbarkeitsprofil auch dann realisierbar wäre, wenn die Zugträger äquidistante bzw. einheitliche Abstände aufweisen würden. Denn die in dieser Ausführungsform verwendeten Zugträger 25, 35, 45, 55 weisen unterschiedliche Durchmesser d₁ und d₂ auf, wobei sich die Zugträger 45 und 55 von den Zugträgern 25 und 35 ferner in dem Werkstoff unterscheiden, aus dem sie gebildet sind. So sind die Zugträgern 25 und 35 aus einem Werkstoff gebildet, der eine kleinere Zugfestigkeit Rₘ als die Zugträger 45 und 55 aufweist. Die in Bezug auf die Mitte M des Zahnriemens 1 symmetrische Anordnung der Zugträger 25, 35, 45, 55 bewirkt ein Zugbelastbarkeitsprofil, welches ebenfalls symmetrisch in Bezug auf die Mitte M des Zahnriemens ist, welches aber von der Mitte M bis zu der jeweiligen Seitenkante 7 eine variierende Zugfestigkeit bzw. Zugbelastbarkeit Rₘ aufweist.

Der Erfindung liegt die Erkenntnis zugrunde, dass die Verteilung der Vergleichsspannungen in einem Zahnriemen aus Polyurethan auch bei ideal gleichförmiger Lasteinleitung bei weitem nicht gleichmäßig ist. Das Verhältnis von Länge zu Breite des Zahnriemens (der Zahnriemen ist im Verhältnis zu seiner Länge sehr schmal), die diskrete Lastführung in einzelnen Zugträgern sowie die geringe Steifigkeit des Polyurethans, die schon bei geringen Lastdifferenzen zu signifikanten Dehnungsunterschieden führt, führen zu deutlichen Unterschieden in den Zugträgerkräften und bewirken zwei ausgeprägte Spannungsmaxima im Zentrum der Zahnflanke. Bei asymmetrischer Lasteinleitung nehmen diese Maxima je nach Grad der Asymmetrie erheblich zu. Da die Lebensdauer eines jeden Bauteils durch die Ermüdung des höchstbelasteten Materialteilchens im Bauteil bestimmt wird und da der Verschleiß eines jeden Bauteils vom Kreuzprodukt aus Normalspannungsvektor und Relativbewegungsvektor abhängt, ist es für die Nutzungsdauer des Bauteiles stets von Vorteil, Lastspitzen bzw. Spanungsmaxima zu minimieren. Da jedes Bauteil - so auch ein Zahnriemen - aber stets eine vorgegebene äußere Last zu ertragen hat, muss aufgrund der überraschenden Erkenntnis der Spannungsmaxima die vorgegebene Last möglichst gleichmäßig auf die Bauteilquerschnitte verteilt werden. Das Ziel der Erfindung ist daher die Erhöhung der Lebensdauer des Zahnriemens, wobei die Änderungen an der Verteilung, der Kombination oder des Werkstoffs der Zugträger im Inneren des Zahnriemens die Lastverteilung in den Zugträgern vergleichmäßigen, so dass auftretende Spannungsmaxima vermindert werden und damit der Verschleiß am Zahnriemen verringert und seine Lebensdauer erhöht werden.

Zusammenfassend werden damit von der vorliegenden Erfindung zur Lösung der sich gestellten Aufgabe die vorstehend im Detail beschriebenen Möglichkeiten bereitgestellt, durch die eine symmetrische, aber in Breitenrichtung variierende bzw. sich ändernde Lastaufteilung auf die Zugträger realisierbar ist. Hierbei weisen die Zugträger unterschiedliche Festigkeitseigenschaften auf, wodurch ein Zahnriemen geschaffen ist, der ein über seiner Breite variierendes Lastaufnahmevermögen besitzt. Gemäß einer ersten erfindungsgemäßen Möglichkeit kann die Verteilung der Zugträger in Breitenrichtung durch Abstandsvariation (siehe Figur 2 für eine Zugträgerkonzentration am Rand des Zahnriemens und Figur 4 für eine Zugträgerkonzentration in der Mitte des Zahnriemens) optimiert werden. Die Zugträger werden ungleichmäßig in Breitenrichtung des Zahnriemens verteilt. Durch die Konzentration der Lastverteilung in Bereiche, in denen die Flächenpressungen auf der Zahnflanke niedrig sind, werden hochbelastete Bereiche entlastet und niedrig belastete Bereiche stärker belastet. Das Bestreben dabei ist immer, eine unterschiedliche Lastverteilung auf den Zahnflanken in Breitenrichtung des Riemens dahingehend zu vermindern, dass geometrisch stabilere Querschnitte des Zahnriemens die höheren Belastungen aufnehmen müssen und instabilere Querschnitte entlastet werden. Gemäß einer zweiten Möglichkeit können unterschiedliche Materialien bzw. Werkstoffe der Zugträger des Zahnriemens verwendet werden (siehe Ausführungsformen der Figuren 5 und 6). Ähnlich wie bei der ersten Möglichkeit lässt sich mit dem Nutzen von Zugträgern unterschiedlicher Steifigkeit infolge unterschiedlicher Materialeigenschaften ein in Breitenrichtung variierendes Zugbelastbarkeitsprofil erzielen. Gemäß einer dritten Möglichkeit können unterschiedliche Durchmesser der Zugträger des Zahnriemens verwendet werden (siehe Ausführungsformen der Figuren 7 bis 10). Ähnlich wie bei der ersten und zweiten Möglichkeit lässt sich mit dem Nutzen von Zugträgern unterschiedlicher Steifigkeit infolge unterschiedlicher Durchmesser ein in Breitenrichtung des Zahnriemens variierendes Zugbelastbarkeitsprofil erzielen.

Die vorstehend beschriebene Erfindung ist selbstverständlich nicht auf die beschriebenen und dargestellten Ausführungsformen beschränkt. Auch ist die in Figur 11 gezeigte Kombination der vorgestellten Variationsmöglichkeiten (Abstand, Werkstoff, Durchmesser) nur beispielhaft. Denn denkbar sind auch davon abweichende Kombinationen der vorgestellten Variationsmöglichkeiten. Somit können an den in der Zeichnung dargestellten Ausführungsformen zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Zahnriemen (1) mit einem elastischen Grundkörper (2) und mit auf einer Seitenfläche des Grundkörpers (2) angeordneten Zahnprofilen (3), wobei der Grundkörper (2) durch längslaufende Zugträger (5, 15, 25, 35, 45, 55) verstärkt ist, die ein in Bezug auf die Breitenrichtung (BR) des Zahnriemens (1) vorzugsweise symmetrisches Zugbelastbarkeitsprofil (6) ausbilden,
**dadurch gekennzeichnet, dass**
das von den Zugträgern (5, 15, 25, 35, 45, 55) ausgebildete Zugbelastbarkeitsprofil (6) in Breitenrichtung (BR) des Zahnriemens (1) in Abhängigkeit von dem Durchmesser und/oder dem Werkstoff der Zugträger (5, 15, 25, 35, 45, 55) variierend ausgebildet ist.

2. Zahnriemen (1) nach Anspruch 1, **dadurch gekennzeichnet, dass** zumindest ein Zugträger (25, 35, 45, 55) einen Durchmesser (d₁, d₂) aufweist, der sich von dem Durchmesser (d₁, d₂) der übrigen Zugträger (25, 35, 45, 55) unterscheidet.

3. Zahnriemen (1) nach Anspruch 1 oder 2, **dadurch gekennzeichnet, dass** zumindest ein Zugträger (5, 15, 45, 55) aus einem Werkstoff gebildet ist, der sich von dem Werkstoff der übrigen Zugträger (5, 15, 45, 55) unterscheidet.

4. Zahnriemen (1) nach einem der vorhergehenden Ansprüche, **dadurch gekennzeichnet, dass** die Abstände (b₁, b₂) zwischen benachbarten Zugträgern (5) uneinheitlich sind.

5. Zahnriemen (1) nach Anspruch 4, **dadurch gekennzeichnet, dass** die Abstände (b₁, b₂) zwischen benachbarten Zugträgern (5) von der Mitte (M) des Zahnriemens (1) aus zu den Seitenkanten (7) des Zahnriemens (1) hin zunehmen.

6. Zahnriemen (1) nach Anspruch 4, **dadurch gekennzeichnet, dass** die Abstände (b₁, b₂) zwischen benachbarten Zugträgern (5) von der Mitte (M) des Zahnriemens (1) aus zu den Seitenkanten (7) des Zahnriemens (1) hin abnehmen.

7. Zahnriemen (1) nach Anspruch 4, **dadurch gekennzeichnet, dass** die Abstände (b₁, b₂) zwischen benachbarten Zugträgern (5) von der Mitte (M) des Zahnriemens (1) aus in Richtung der Seitenkanten (7) des Zahnriemens (1) zunächst abnehmen und dann bis zu den Seitenkanten (7) wieder zunehmen.

8. Zahnriemen (1) nach einem der Ansprüche 4 bis 7,
**dadurch gekennzeichnet, dass** die Änderung der Abstände (b₁, b₂) zwischen benachbarten Zugträgern (5) kontinuierlich erfolgt.

9. Zahnriemen (1) nach Anspruch 5, **dadurch gekennzeichnet, dass** die Abstände (b₁, b₂) zwischen benachbarten Zugträgern (5) von der Mitte (M) des Zahnriemens (1) aus in Richtung der Seitenkanten (7) des Zahnriemens (1) zunächst zunehmen und dann bis zu den Seitenkanten (7) wieder abnehmen.

10. Zahnriemen (1) nach einem der Ansprüche 4 bis 9,
**dadurch gekennzeichnet, dass** die Zugbelastbarkeit (Rₘ) bei allen Zugträgern (5) im Wesentlichen gleich ist.
